# EUROPEAN PATENT APPLICATION

(11) **EP 2 456 196 A1**
(43) Date of publication of application: **23.05.2012**
(21) Application number: 11189608.0
(22) Date of filing: 17.11.2011
(51) Int. Cl.: H04N 5/445, H04N 21/482

(54) **Improvements to an electronic program guide and implementation method thereof**

(30) Priority: 23.11.2010 GB 201019832
(71) Applicant: Pace Plc, Shipley BD18 3LF (GB)
(72) Inventor: Novi, Benjamin, Shipley, BD18 3LF (GB)
(74) Representative: Tomkinson, Alexandra

(57) **Abstract**

This invention relates to an electronic program guide (EPG) for viewing on a display screen comprising a table or grid containing a plurality of cells. Each cell is individually selectable by a user to allow navigation of the table or grid. One or more of the cells contain information relating to one or more programs. At least one of said cells is capable of containing information relating to more than one program.

## Description

The invention to which this application relates is an electronic program guide (EPG) and a method of use thereof.

EPGs typically provide schedule information for television and/or radio programs which may be received via a broadcast data receiver (BDR) or a set top box (STB), integrated into a display screen or television, or provided as a separate device to a television or display screen. The EPG is generated from data which is broadcast from a remote location such as by a television service provider or even an independent television guide provider. The data is broadcast to a number of locations via satellite, cable and/or terrestrial systems and, typically in digital form, where it is received by the BDR, decoded and processed to provide audio, video and/or auxiliary data, at least part of which is used to generate the EPG for use and reference by a user of a television or BDR apparatus.

A television or other display screen is typically connected to the BDR via wired or wireless means to allow EPG data to be viewed thereon, usually in a grid or table format in which one axis typically represents the date and/or time of a particular program, and the other axis represents the program channel showing a particular program. Each program is typically identified by at least the program title being listed in an appropriate cell of the grid located in a grid position according to its associated program channel and scheduled showing time and date. In order for a user to navigate through an EPG, a user typically moves a cursor or highlight bar from cell to cell in the grid, either in a vertical direction and/or a horizontal direction, using one or more keys on a remote control device or using other suitable control means.

However, as the number of channels increases, it becomes more difficult for the user to navigate through all the information shown on the EPG. In addition, some channels provide more programs in a day than others, thereby resulting in a larger number of cells being provided in the grid for a particular channel, which in turn increases the number of key presses a user has to perform using a remote control or other control device to navigate through the grid or through the cells of the particular channel.

For example, a children's channel such as CBBC or CBeebies may provide more than thirty programs per day, each program typically being of a relatively short duration, meaning that it could take a user up to thirty key strokes of the remote control to navigate the cells representing a whole day on the EPG.

Furthermore, in some implementations, such as an EPG arranged as a vertical grid (where the x axis represents time and/or date and the y axis represents a particular program channel), the titles of short duration programs may be masked because the cells in which they are displayed are too small to fully display the same. This is because the size of a cell on a conventional EPG is substantially proportional to the duration length of the program that is being advertised in the cell. Indeed, in the case of programs which are only a few minutes long, only a few letters of the program may be displayed, thereby preventing the user from having an efficient overview of the program schedule.

It is therefore an aim of the present invention is to provide an EPG which is easier to navigate and use.

It is a further aim of the present invention to provide a method of using an EPG which is easier to navigate and use.

In an aspect of the invention, there is provided an electronic program guide (EPG) for viewing on a display screen, comprising:
a table or grid containing a plurality of cells;
the cells being individually selectable by a user to allow user navigation of the table or grid;
one or more of the cells containing information relating to one or more programs,
characterised in that at least one of said cells is capable of containing information relating to more than one program.

Advantageously when the user navigates the EPG table or grid, rather than having to select individual cells for each program, a two or more programs may be grouped together in a cell so that the user can navigate more quickly through the EPG.

Preferably the program information provided in the EPG relates to one or more television and/or radio programs. The information is typically generated from audio, video and/or auxiliary digital data broadcast by a broadcaster and received by a broadcast data receiver and/or television system on which the EPG is to be displayed.

In one embodiment one or more preset or predetermined criteria are used to determine if a cell of the table or grid contains information relating to a single program only or a plurality of programs (i.e. the preset criteria determines the number and/or type of programs to be shown in a single cell of the EPG).

In one embodiment the preset criteria are based on any or any combination of the following:
(i) the time duration of a program in relation to a predetermined time period;
(ii) a program rating in relation to a predetermined setting or rating;
(iii) a positive or negative indication that information relating to a program should be contained in a cell with information relating to one or more other programs;
(iv) a recommendation of the program from a user or third party;
(v) a start time of a program in relation to a predetermined time or time period;
(vi) the authority of a user to watch a program;
(vii) presentation information, such as size, layout and schema;
(viii) user and/or operator preferences;
(ix) input controller type (i.e. the type of user control means available);
(x) program content type.

In one embodiment one or more dimensions of a cell is/are substantially proportional to or is/are related to a particular preset criteria relating to the program or the time period for which one or more programs contained therein are due to be shown for. Thus, if a program has a relatively long showing time, the program will be shown in a single cell on the EPG. If a program has a relatively short showing time, the program may be grouped with one or more other programs in a single cell on the EPG, such that the cell size is sufficiently large to show the information of all programs contained therein.

In one embodiment a broadcaster and/or a user choose the settings for the preset criteria. Typically if a user changes any preset criteria relating to the table or grid layout for the EPG, these changes are updated in the EPG accordingly. Thus the display can be updated 'on the fly' by a user in one embodiment.

In one example, a cell contains information relating to one program only if the duration thereof is equal to or more than a predetermined time period of, for example, one hour or more. There should be sufficient space in the EPG due to the relatively long program showing time for the program information to occupy a single cell. If the program is less than a predetermined time period, such as for example, 15 minutes or less, a plurality of programs may be contained in a single cell in order for the cell to be of a sufficiently large size to allow sufficient program information to be displayed therein.

In one example, a cell contains information to one program only if a program rating associated with the program is deemed to be of a sufficiently high standard or rating to warrant an individual cell to contain the program information in. For example, if a program is rated at three stars or greater, then the program may be considered a sufficiently high standard or rating to be contained within a single cell on the EPG. If a program is rated at less than 3 stars (i.e. 0 star, 1 star or 2 stars) it may be contained in a cell with a number of other poorly rated or similar programs..

In one embodiment a single cell contains information relating to a plurality of programs if the duration of each of the programs is less than or equal to a predetermined period of, for example, thirty minutes, and/or the predetermined start time is during an "off-peak" showing time, for example, at midnight or later.

It will of course be appreciated that the user can choose appropriate settings for the preset criteria in accordance with their preferences. Typically the present criteria can be adjusted and/or saved by the user as a personal profile.

In one embodiment processing means are provided to process the EPG data and determine, based on the pre-set criteria, whether program information is to be displayed in a single cell alone or in a single cell with information relating to other different programs. The processing means can be provided as part of the BDR, television apparatus, display screen, as a separate device and/or the like.

In one embodiment a personal profile of a user of the BDR or television apparatus can be used to set a number of criteria for defining the layout of the EPG and grouping of the programs in the EPG cells. For example, if a user profile indicates the user is visually impaired, the screen size, layout, cell size, number of program displayed in a cell and/or the like can be adapted in an appropriate manner.

Typically the EPG is generated from received digital data and displays at least schedule information relating to television and/or radio programs. Additional program information can be contained in the cell if there is sufficient space in the cell.

In one embodiment processing means are provided to allow cells to be analysed and concatenated if one or more of the appropriate preset criteria are met. The cell formed from the concatenation and containing information relating to more than one program is hereinafter referred to as a block. A block according to the present invention contains program information equivalent to at least two cells of a conventional EPG.

Typically a cell or block is substantially proportional in size to the total duration of the programs indicated therein.

In one embodiment, the plurality of programs contained within a cell or block are arranged according to any or any combination of program genre, chronological order, time duration, rating, user definition, successive episodes of the same program series and/or the like. Preferably the programs are arranged in a list format within the cell.

Typically if the total time duration of a cell or block containing a number of different programs is more than a predetermined value, the cell or block is subdivided into smaller cells or blocks containing a relatively fewer number of plurality of programs, typically of approximately equal size representing shorter time durations.

In one embodiment the cell or block may be subdivided according to one or more predetermined rules, typically such that related programs are kept together in a particular cell or block.

Typically the one or more predetermined rules may relate to any or any combination of:
(i) successive episodes of the same series;
(ii) programs of the same or associated genre;
(iii) chronologically;
(iv) user-definition of the programs.

In one embodiment a single cell or block is provided with an indicator relating to a characteristic of a program or programs indicated therein. For example, a visual indicator can be provided.

Preferably the indicator relates to a common characteristic of all or a majority of the programs in the cell or block.

In one embodiment the indicator is or includes an advertisement, a logo and/or the like. In a further embodiment the indictor is a link to a related program or programs.

Typically if the programs contained in a cell or block are of the same particular genre, a corresponding logo is displayed with the cell or block. Typically if the user is not authorised to watch the programs indicated in a block, the cell or block is associated with a particular colour, indicator and/or the like.

Typically the block or cell is substantially aligned in the table or grid according to the start time of the earliest program listed in the block. For example, the leading edge of the cell or block is typically substantially aligned with an indicator corresponding to the start time of the earliest program listed in the cell or block.

In one embodiment the cell or block is selectable by a user using suitable selection or control means to allow navigation and/or actions to be taken with respect to any program of the plurality of individual programs indicated within the cell or block.

In one embodiment the cell or block is selectable to allow a particular action to be taken in respect of all the programs indicated within the cell or block. The program selection within the cell or block can be undertaken substantially simultaneously.

Typically the actions include recording, playback, selection of a special offer, promotion and/or the like.

In a further aspect of the invention, there is provided a method of creating an electronic program guide (EPG) for viewing on a display screen, comprising the steps of:
generating a table or grid containing a plurality of cells, each cell containing information for a particular program and being individually selectable by a user to allow navigation of the table or grid;
analysing program and/or schedule data for a plurality of programs to be displayed in the EPG;
and displaying the program data in one or more cells of the table or grid;
characterised in that data relating to two or more programs is concatenated into a single cell in the table or grid.

Preferably two or more of the cells of the table or grid may be concatenated to form a selectable block containing information relating to more than one program.

Thus the schedule and/or program data is analysed and cells may be concatenated into blocks which contain multiple programs, so it is quicker for a user to navigate the EPG.

In one embodiment cells containing information relating to one program are displayed if any or any combination of predetermined default criteria are fulfilled, typically unless one or more predetermined override criteria are met in which case blocks are formed.

In one embodiment a cell contains information relating to one program, or cells are concatenated into blocks containing information relating to a plurality of programs, depending on one or more preset criteria.

In one embodiment if the total duration of a block is more than a predetermined value the block is subdivided into smaller blocks, typically such that related programs and/or chronologically ordered programs are kept together.

Typically a single cell is created for every program that cannot be concatenated, with a size matching the program duration in the same proportion as the blocks.

In one embodiment the cells and/or blocks are displayed continuously in chronological order with respect to each channel.

In one embodiment the user navigates the cells and/or blocks of the EPG using the arrow buttons on a remote control or using other suitable control means. Typically the user navigates the table by selecting successive cells and/or blocks using the remote control or control means.

In a further embodiment the user navigates the cells and/or blocks of the EPG using a touch-screen. Typically the user selects the desired cell or block by touching the corresponding area of the touch-screen.

In one embodiment the user can enter the block to allow navigation of the programs indicated within the block.

In one embodiment the user can apply a particular action request to the block so that the action is taken in respect of all the programs indicated within the block. Typically the actions include recording, playback, selection of a special offer, and/or the like.

In a yet further aspect of the invention there is provided a broadcast data receiver comprising an EPG as herein described.

Specific embodiments of the invention are now described wherein:-
Figure 1 illustrates an EPG according to embodiment of the invention, with a cell selected.
Figure 2 illustrates the EPG of Figure 1, with a block selected.
Figure 3 illustrates an EPG according to the prior art.
Figure 4 illustrates a broadcast data receiver including the EPG of Figure 1.

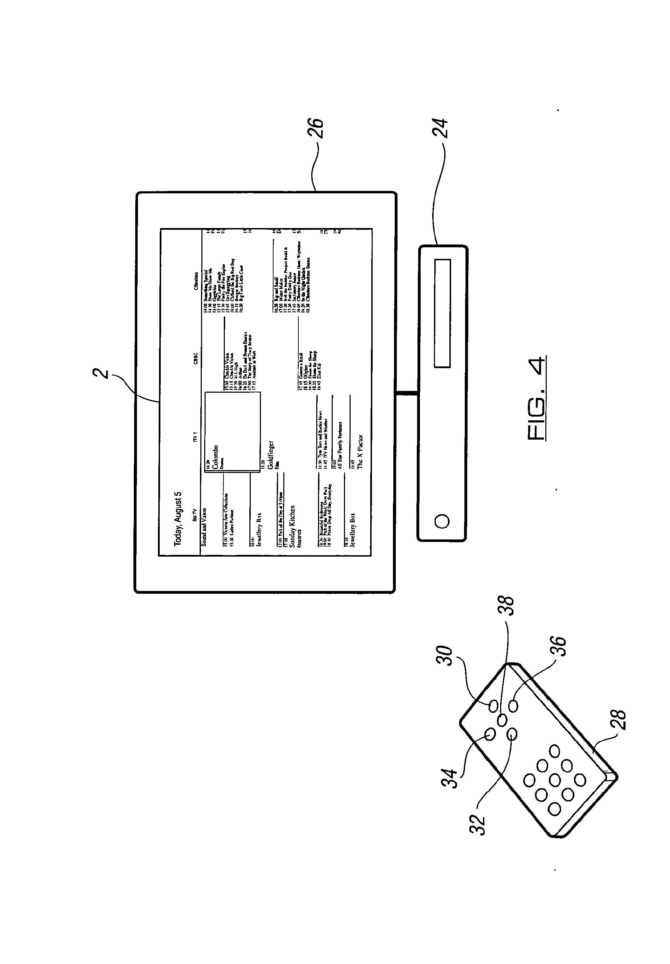

With reference to Figure 4, a television system is shown including a broadcast data receiver 24, which receives audio, video and/or auxiliary digital data from a broadcaster located at a remote location, decodes and processes at least part of the data to generate an EPG 2 therefrom on a display screen 26 associated with the BDR.

The EPG 2 comprises a table of cells which can be navigated by the user via a remote control 28 forming part of the television system, and cells may be successively selected when the user presses the direction keys UP 30, DOWN 32, LEFT 34, or RIGHT 36 provided on the remote control.

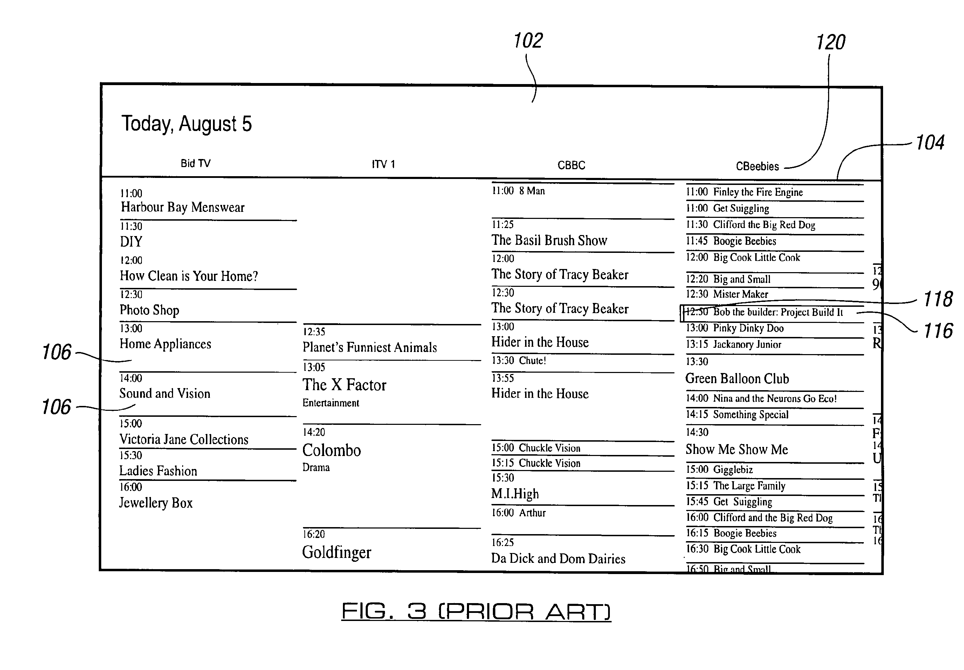

A conventional EPG 102 is illustrated in Figure 3 comprising a table 104 in which each cell 106 is dedicated to information relating to a single program. The table is set out with channels along the x-axis and time along the y-axis. Each cell is typically proportional in size to the time duration for which the program indicated in the cell is shown for.

However, navigation of the table 104 is slow when there are many programs of short duration, resulting in many cells of small size in the EPG, as may occur in the CBeebies channel 120 where cartoons are shown for relatively short time durations.

In this example, a program 116 of ten minutes duration is selected, as indicated by the highlighted edge 118 of the cell, and it can be seen that navigating to later programs in the same channel would require a large number of key presses to move the highlighted edge through each of the cells to get to the desired cell.

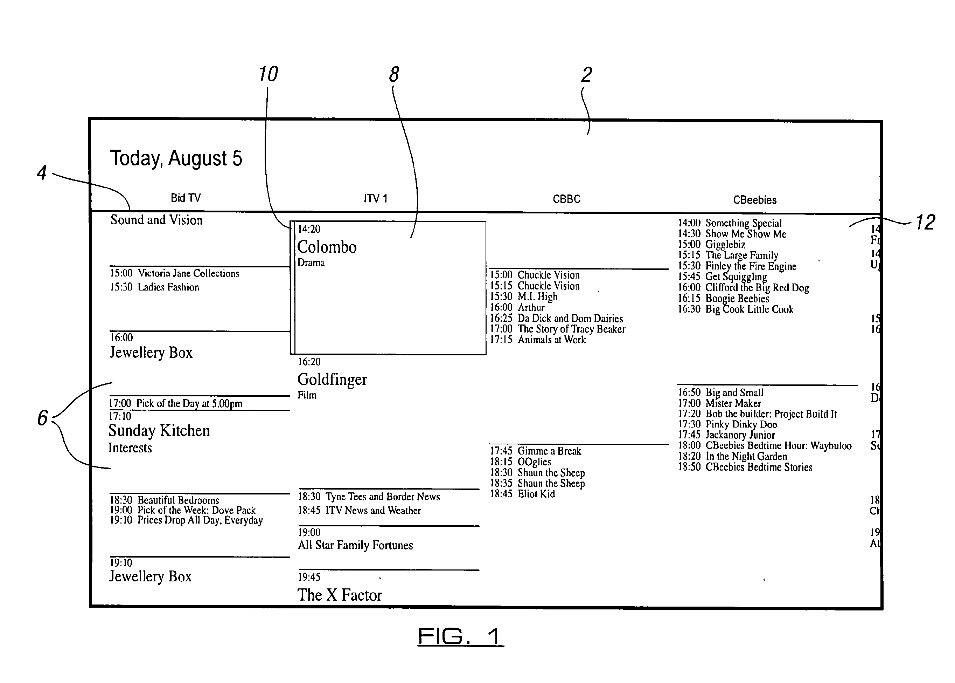

With reference to Figure 1, there is illustrated a similar EPG 2 comprising a table 4 containing a plurality of cells 6. Again, the table is set out with channels along the x-axis and time along the y-axis although it will be appreciated that it could be the other way around.

As in conventional tables, a cell 8 containing information relating to a single program may be selected, as indicated by the highlighted edge 10. However, the table also contains cells which contain information relating to more than one program, such as block 12 containing a number of children's programs of the CBeebies channel 20, in accordance with the present invention.

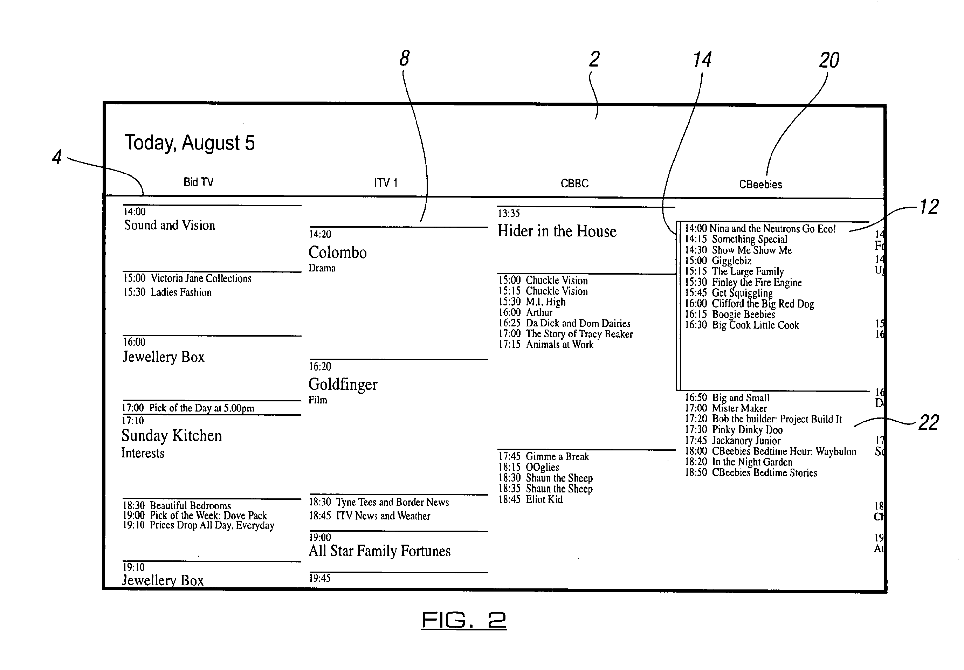

With reference to Figure 2, the user can press the RIGHT key 36 on their remote control to move the selection 14 across to the block 12, and can select the next cell or block 22 down by a single key press of the DOWN key 32.

As such, it becomes easier to navigate through the table as the program information is grouped together in selectable blocks formed from the concatenation of individual cells. Each block contains a plurality of different programs.

If a user wants to record or perform an alternative action on the whole block of programs they can simply perform the action on the highlighted block as they would with a regular cell containing a single program. However, if a user wishes to perform an action on a single program within the block, they can enter the block by pressing the OK button 38 on the remote control 28, such that the user can then select the individual programs for action within the block. To return from the block the user can press the BACK or LEFT key 34.

The schedule is analysed and the cells are concatenated prior to display according to one or more preset criteria.

In the example illustrated in Figures 1-2, the cell 8 only contains information relating to a single program because the duration of the program is more than an hour. The vertical size of the cell is proportional to the duration, and the top of the cell is aligned vertically according to the time when the program starts.

The block 12 is formed from cells which have been concatenated because each of the programs therein are 15 minutes or less in duration. The vertical size of the block is proportional to the total duration of the programs indicated therein, and the top of the block is aligned vertically according to when the first program listed starts.

It will be appreciated that it is also undesirable to have a block which is too large, as this would also make navigation of the table 4 difficult. As such the subsequent block 22 is split from the earlier block 12 to ensure both blocks are no more than a pre-set time period long, such as 100 minutes long.

In an example of the invention, the following steps occur;
1. Schedule data for the programs is analysed by processing means of the BDR for each channel to display program information in chronological order;
2. Each cell containing a program is analysed to determine if it can be concatenated with other cells to form a block,
   wherein conditions to prevent concatenation may include;
   the duration of the program is 30 minutes or more;
   the program has a rating of 3 out of 5 stars or more;
   the program is indicated by the operator as not to be concatenated;
   the program is highly recommended to the users;
   and wherein conditions to supersede the prevention conditions may include;
   the duration of the program is 5 minutes or less;
   the program starts after 1am;
   the user is not authorised to watch the programs.
3. For each channel, cells containing continuous programs are concatenated into a block where appropriate, the height of the block being proportional to the sum of the durations of the programs contained therein;
4. The block is split into smaller blocks if the total duration exceeds a predetermined duration such as two hours, typically in an even fashion, and/or to gather programs logically together, such as successive episodes of the same series or programs of the same or associated genre;
5. The table is displayed with the cells and blocks being arranged continuously for each channel in chronological order, the tops of the cells matching the start time of the program therein, the tops of the blocks matching the start time of the earliest program listed therein.
6. Blocks relating to a particular genre e.g. children's programs can display an indicator such as a dedicated logo. Blocks which contain programs the user is not authorised to watch may be coloured grey or other indicative colour. Other information associated with the program may be displayed, such as toy advertising in connection with blocks of children's programs, or Video on Demand to the sequel of a movie displayed in a cell.
7. The user can then navigate through the table's cells and/or blocks using the remote control keys or other means such as a touch-screen. A block can be entered via user selection to allow the user to navigate the programs within the block. Actions can be performed on the individual programs within the block or on the block as a whole.
8. Programs can be recorded and/or played back as a block. Actions can be defined by the operators, e.g. for a Pay Per View (PPV) channel a special offer could be displayed in connection with the block in comparison with the offers for the individual programs. Thus a better offer may be provided for a movie and its sequel, or 3 episodes of a series, than if the programs were selected individually.

As such the invention provides an EPG which is easier to navigate through, and which can be configured in accordance with the user's and/or operators preferences.

It will be appreciated by persons skilled in the art that the present invention may also include further additional modifications made to the device which does not affect the overall functioning of the device.

## Claims

1. An electronic program guide (EPG) for viewing on a display screen comprising a table or grid containing a plurality of cells, each cell being individually selectable by a user to allow navigation of the table or grid, one or more of the cells containing information relating to one or more programs, **characterised in that** at least one of said cells is capable of containing information relating to more than one program.

2. An EPG according to claim 1 wherein one or more preset criteria are used to determine the number and/or type of programs displayed in a single cell of the EPG.

3. An EPG according to claim 2 wherein the preset criteria is based on any or any combination of the following: i) the time duration of a program in relation to a predetermined time period; ii) a program rating in relation to a predetermined rating; iii) positive or negative indication that information relating to a program should be contained in a cell with information relating to one or more other programs; iv) a recommendation of the program from a user or third party; v) a start time of a program in relation to a pre-determined time or time period; vi) the authority of a user to watch a program; vii) presentation information; viii) user and/or operator preferences; ix) input controller type; x) program content type.

4. An EPG according to claim 1 wherein the size of a cell in the table or grid is substantially proportional to or relates to a particular preset criteria relating to the program or a time period for which one or more programs contained in the cell are shown for.

5. An EPG according to claim 2 wherein EPG processing means are provided to process the EPG data and determine, based on the preset criteria, whether program information is to be displayed in a single cell alone or concatenated in a cell or block with information relating to other programs.

6. An EPG according to claim 5 wherein if the time duration of a block is more than a predetermined value, the block is subdivided according to one or more predetermined rules.

7. An EPG according to claims 1 or 6 wherein where a number of different programs are contained within a single cell or block, the programs are arranged according to or the predetermined rules are any or any combination of chronological order of the programs, time duration of the programs, program rating, user definition of the programs, program genre or successive episodes of the same program series.

8. An EPG according to claim 5 wherein the cell or block containing a plurality of different programs is provided with an indicator relating to a characteristic of one or more or all the programs indicated therein.

9. An EPG according to claim 8 wherein the indicator is or includes an advertisement, a logo and/or a link to a related program or programs.

10. An EPG according to claim 1 wherein a leading edge of the cell containing a plurality of different programs is substantially aligned with an indicator corresponding to the earliest start time of the programs listed in the cell.

11. An EPG according to claim 1 wherein the cell containing a plurality of different programs is selectable by a user to allow navigation and/or actions to be undertaken with respect to any program of the plurality of programs indicated in the cell.

12. An EPG according to claim 1 wherein the cell containing a plurality of different programs is selectable by a user to allow navigation and/or an action to be undertaken with respect to all the programs indicated in the cell.

13. An EPG according to claim 11 or 12 wherein the action includes recording, playback and/or selection of a special offer or promotion.

14. A method of creating an electronic program guide (EPG) for viewing on a display screen, comprising the steps of: generating a table or grid containing a plurality of cells, each cell containing information for a particular program and being individually selectable by a user to allow navigation of the table or grid, analysing program and/or schedule data in one or more cells of the table or grid, **characterised in that** data relating to two or more programs is concatenated into a single cell in the table or grid.

15. A method according to claim 14 wherein one or more preset criteria are used to determine the number of programs displayed in a single cell of the EPG.
